# EUROPEAN PATENT SPECIFICATION

(11) **EP 1 939 362 B1**
(45) Date of publication and mention of the grant of the patent: **01.05.2019**
(21) Application number: 06127227.4
(22) Date of filing: 27.12.2006
(51) Int. Cl.: E02F 3/96, E02F 9/28, E04G 23/08

(54) **Work tool comprising a releasable tooth mounted on a tooth support member**
Werkzeug mit abnehmbaren Zahn montiert auf einem Zahnstützelement
Outil de travail muni d'une dent amovible montée sur un support de dent

(43) Date of publication of application: 02.07.2008
(73) Proprietor: Caterpillar Work Tools B. V., 5232 BJ 's-Hertogenbosch (NL)
(72) Inventor: van Gemert, John, 5451 NN Mill (NL)
(74) Representative: BRP Renaud & Partner mbB Rechtsanwälte Patentanwälte Steuerberater

(56) References cited:
- EP-A- 1 653 009
- GB-A- 1 518 824
- US-A- 915 809
- US-A- 1 808 311
- US-A- 5 187 868
- US-A- 5 533 682
- US-A- 5 724 756

## Description

### Technical Field

This invention pertains to work tools having one or more replaceable teeth, especially work tools for machines such as earth working machines like excavators, scrapers or power shovels. The replaceable teeth may be situated on the forward cutting edge of loader buckets, on piercing tips for scrap shears and the like. The invention in particular relates to replaceable teeth for use in such work tools.

### Background

From GB 1 518 824 in the name of Caterpillar, a detachable earth working tip is known comprising a wedge-shaped support member terminating at its apex frustoconically in a flat surface portion. The tip is placed over the support member and is fixed via a retainer pin that is held in place in a bore by means of torsion spring that is encapsulated by an annular elastomeric member.

From US 5,724,756, also in the name of Caterpillar, releasable teeth of an excavator bucket are shown which are fixed to a frustoconical bucket teeth adaptor via a locking clip element of a locking pin.

The known work tools strive to combine easy replaceability of the teeth with firm and reliable attachment to the work tool. In order to avoid excessive loads on the spring locked mounting pins, the teeth support base is of a specific design to take up loads perpendicular to the mounting pins by an external surface of the support base abutting against an internal surface of the hollow teeth. The surfaces must match relatively closely and alignment of the mounting holes in the tooth with those in the support member may be difficult, as visual inspection of the support member position inside the tooth is not possible. Also inclusion of dirt between the hollow tooth and the support member may hinder easy tooth replacement.

Especially for a piercing tooth of a scrap cutter, the loading direction during operation may be perpendicular to impacts on the tooth that arise from colliding with objects in the working area when manoeuvring the scrap cutter to its operational position. Placing the tooth support member tightly against the internal parts of the tooth in order to absorb these forces will make replacement of such a tooth more difficult. To solve these problems, it is known to provide a tooth with an opening in its top surface through which opening the top surface of the support member is exposed. Because the tooth support member projects through the opening in the top wall of the tooth, the impacts exerted on the top surface are taken up directly by the tooth support member without these loads being transferred to the locking members, such as locking pins or locking bolts. During operation, the loads parallel to the top surface are taken up via the tooth support member. As the forces transversely to the top surface are taken up directly by the support member, the tooth need not be tightly supported along its whole top surface such that some play is allowed which facilitates positioning of the tooth during attachment. Also, the opening in the top surface provides for a clear view of the relative position of the tooth and the support member for the operator during tooth exchange. Finally, the opening in the top surface allows dirt that is accumulated on the support member to exit from the inner space of the tooth and prevents it from being trapped between the support member and the internal tooth surfaces, hence improving attachment.

Wear of the working surface of the known teeth will lead to a need for tooth replacement. Removal of the known tooth from the support and replacement by a new tooth is relatively difficult. A negative of the known teeth is that the underlying support surface may be damaged during operation of the work tool and be subject to wear.. Removal of a tooth for exchange may especially be difficult in case of damage to the support member. The present invention is directed to overcoming one or more of the problems as set forth above.

DE202004001956U1 and WO 2005/075083 disclose a releasable tooth for a "demolition tool". This tooth is basically a hollow element comprising side surfaces, a frontal wall, a top wall and a rear end. The tooth has a cutting edge at the top of the frontal wall. The tooth can be releasably mounted on a support member. The tooth has a rear surface which has an inside ridge and an opening just above it, in the rear surface. The support member has a curved hollow part at a front end, which can engage over a comparably curved counterpart inside the frontal end of the tooth. The support member is further provided with a spring biased pin at the rear end, which can engage the upper side of the ridge, inside the tooth. The opening is provided for ease of releasing the tooth: the pin can be forced off the ridge by engaging the end of it through the opening. In DE202004001956U1 it is specified that the shape of the top surface of the support member and the inner top wall of the tooth have a corresponding shape, in order to reduce wear and for easier mounting.
From DE202004001956U1 it is clear that the opening is provided in the rear end surface. The pin extending in the opening is not designed to take up directly external forces during use, because that would release the tooth from the support. In DE202004001956U1 the tooth is entirely carried by the top surface of the support member.

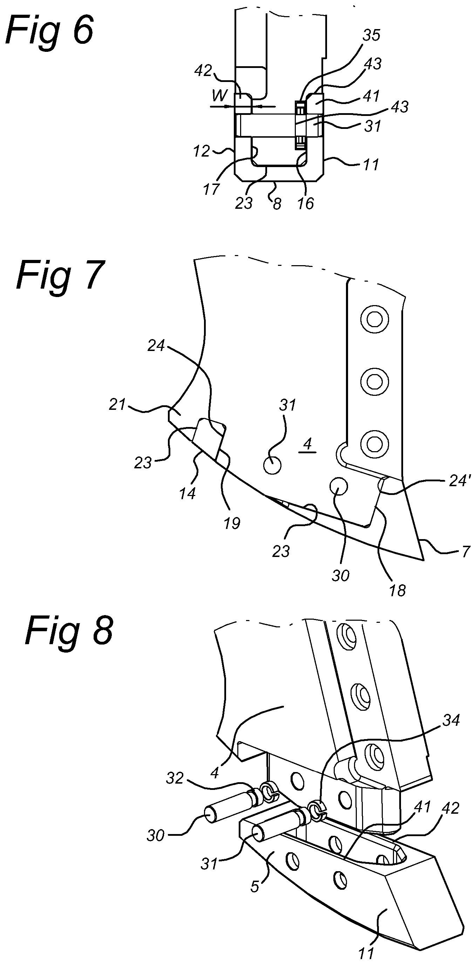

US5187868 discloses heavy duty demolition shears with replaceable blades. These are bolted to the sides and front of the blades of the shears. In the embodiment of fig. 6 - 8 there is a tooth having a substantially massive construction with a blind channel that can be slid over tip ridge of the cutting tool. There is no top wall having an opening, nor side walls having supporting edges.

### Summary of the Invention

According to the present invention there is provided a work tool as defined in claim 1. Optional features are defined in the dependent claims.

According to an exemplary embodiment of the invention, a work tool is provided having a tooth which is releasably attached to a tooth support member, the support member comprising base surface, two spaced apart side surfaces , a front surface, a rear surface, and a top surface extending along a length between the front surface and the rear surface. The tooth comprises two spaced-apart side walls situated alongside the side surfaces, a front transverse part and a top wall extending along a length from the front transverse part. The top wall has an opening overlying a part of the top surface of the support member. The opening extends from a front transverse edge along a length of not more than approximately 50% of the length of the top wall.

The top wall is adapted for transferring a force exerted on the tooth with a component that is directed transversely to the top wall, to the top surface of the support member.

In a further embodiment, an external side of the rear transverse part contacts a shoulder, an internal side of the rear transverse part being situated at a distance from the rear surface of the support member. A wedge-shaped clamping member is fixed between and in contact with the internal side of the rear transverse part and the rear surface of the support member, via a fixing member cooperating with the tooth support member. The fixing member exerts a force on the clamping member that is directed to the base surface. The wedge-shaped clamping member may be easily introduced through the opening in the top surface to fix the tooth on the tooth support member. In this manner no alignment of holes in the side walls of the teeth with holes in the support member is needed and easy and rapid alignment upon fixing of the tooth can be effected.

In another embodiment, the tooth is substantially symmetrical with respect to a central plane that extends transversely to the top wall, each transverse part on either side to the plane defining a cutting edge.

In again another embodiment, the side surfaces of the support member comprise two opposed side surface sections that extend substantially parallel to one another and two adjacent tapering front sections which converge from the side surfaces to a common apex, the tooth having internal side wall sections which are substantially parallel to the side surface sections of the base member. In this way an enlarged surface is provided on the support member for transferring loads in the direction of the top surface of the tooth, such as occur for instance on piercing teeth for demolition shears.

It is to be understood that both the foregoing general description and the following detailed description are exemplary and explanatory only and are not restrictive of the invention.

### Brief Description of the Drawings

Some embodiments of work tool with releasable teeth in accordance with the present invention will by way of example be described with reference to the accompanying drawing. In the drawings:
Fig. 1 shows a perspective view of a demolition shear known in the art having a replaceable tooth;
Fig. 2 shows a perspective view of an embodiment of a tooth according to the invention;
Fig. 3 shows a longitudinal cross-section through the tooth of Fig. 2;
Figures 4 and 5 show further perspective views of the tooth of Fig. 2;
Fig. 6 shows a transverse cross-sectional view of the tooth of figure 4 through the line 4-4;
Fig. 7 shows a longitudinal cross-sectional view of the tooth of figure 4;
Figs. 8 and 9 show a perspective view of a tooth support member having tapering frontal side surfaces, with the tooth in a detached state;
Figs. 10 shows a perspective view of the tooth of figures 8 and 9 in the assembled state;
Figs. 11 and 12 show a perspective view of a comparative example of a tooth having a wedge-shaped clamping member which does not fall under the claimed invention;
Fig. 13 shows a longitudinal cross-sectional view of the tooth of figures 11 and 12;
Fig. 14 and 15 show an embodiment of a generally U-shaped tooth in the detached state and in the assembled state, respectively, of comparative example of a tooth which is open its rear transverse surface which does not form part of the invention; and
Figs. 16 and 17 show embodiments of a tooth having a U-shaped rear part.

### Detailed Description

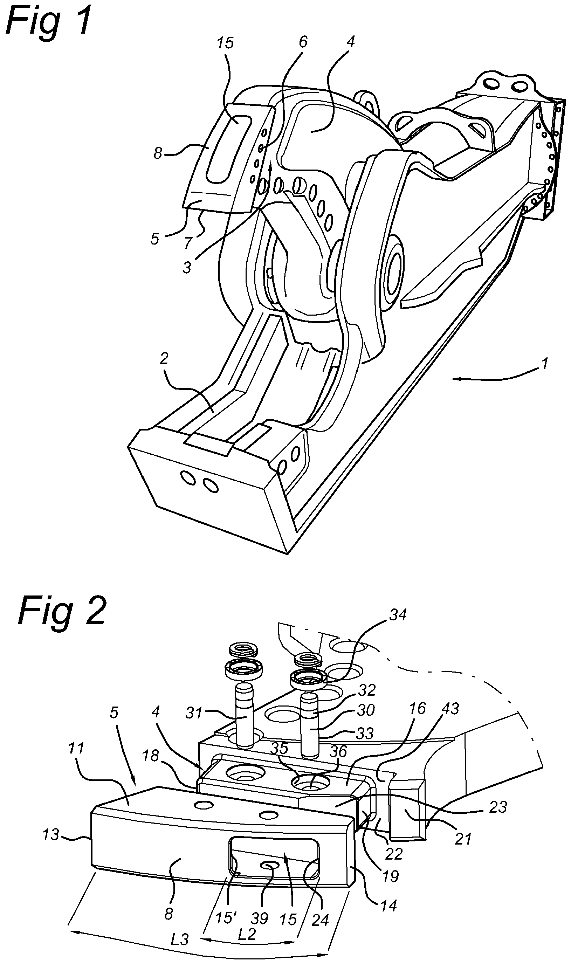

Fig. 1 shows a known work tool 1, in particular a hydraulically powered demolition shear having a shear cutter section 2 and a piercing tip 3. The piercing tip 3 comprises a tooth support member 4 and carries a releasable tooth 5. The tooth 5 is releasably fixed to the support member 4 via four locking pins 6 and comprises a cutting edge 7 and a top wall 8 with an opening 15 therein overlying a part of the support member 4. Because the top surface of the support member 4 is substantially flush with the top wall 8 of the tooth 5, impacts on the piercing tip 3 will be absorbed by the support member 4 and will not be transferred to the locking pins 6. Furthermore, the opening in the top wall 8 provides for visual inspection of the position of the tooth with respect the support number upon attachment and allows dirt that has accumulated between the tooth 5 and the support member 4 to be removed upon attachment. The large opening however results in considerable wear of the support member 4 and the tooth 5 cannot easily be released from the support member 4 by use of a tool.

Fig. 2 shows a tooth 5 having external side walls 11, 12 (see Fig. 6), a front transverse part 13 and a rear transverse part 14. The top wall 8 comprises an opening 15 having a front transverse edge 15'and an internal rear surface 24. The tooth 5 overlies the support member 4, which support member comprises side surfaces 16,17 that are oriented transversely to a base surface 43 on which base surface the side walls 11,12 of the tooth are supported. The support member 4 also has front and rear surfaces 18,19.

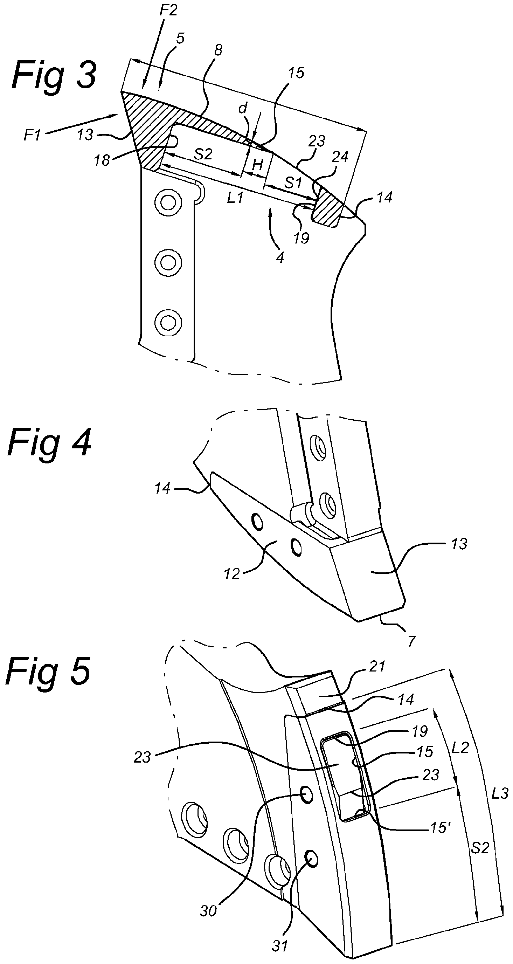

The opening 15 is relatively small and in one embodiment has a length L2 that is smaller than 50% of the length L3 of the top wall 8. In another embodiment, the length L2 of the opening 15 preferably is about 30% of the length L3 of the top wall. The front part of the tooth covers a length S2 (see Fig. 3) of the support surface which length is at least about 50% of the length L1 of the support member 4, such that the front part of the support member is protected against wear during operation. The embodiment of the tooth shown in Fig. 2 transfer loads exerted on the front transverse part 13 to the front surface 18 of the support member 4, whereas forces exerted transversely to the top wall 8 are taken up by the top surface 23 and, via the side walls 11,12, are transferred to the base surface 43.

As can be seen from Fig. 3, the top wall 8 extends between front transverse part 13 and rear transverse part 14 along the length L3. The opening 15 in the top wall 8 is defined by the front transverse edge 15'and internal rear surface 24, the opening extending along a length L2. The support member 4 has a top surface 23 extending between front surface 18 and rear surface 19 along a length L1.

A rear part S1 of the top surface 23 of the support member 4 extends into the opening 15 so as to be substantially flush with the tooth top wall 8 It is also feasible, in an alternative embodiment, that the top surface 23 of the support member 4 within the opening 15 is situated below or above the top wall surface of the tooth.

A front part S2 of the top surface 23 of the support member 4 extends at an angle with respect to the rear part to extend below the front transverse edge 15' of the opening 15 in the tooth top wall 8. Hence a lowered area is formed providing an access space for a tool for impacting against the front transverse edge 15' of the opening 15 (which front edge in one embodiment has a thickness d of for instance 10 mm) with a tool for loosening of the tooth 5 upon exchange.

Forces F1 with a component transversely to the front transverse part 13 are taken up by the front surface 18 of the support member 4, whereas forces F2 acting on the top surface 8 of the tooth are taken up by the front part S2 of the top surface 23.

As can be seen from Fig. 5, a shoulder 21 is formed at a distance from the rear surface 19 of the support member, such that a recess 22 is formed. When the tooth 5 is placed over the support member 4, the external rear side 14 of the tooth engages with the shoulder 21, whereas the internal rear surface 24 of the opening 15 of the tooth 5 engages with the rear surface 19 of the support member 4.

Fig. 6 illustrates that the side wall edges 41,42 of the tooth 5 are supported on the base surface 43 of the support member, which has a width W substantially equal to the side wall thickness, such that the support member does not project beyond the side walls 11,12. As the side walls 11,12 of the tooth 5 are substantially flush with the support member 4, the tooth is properly protected against undesired impacts.

As can be seen in Fig. 7, an internal front wall part 24' of the tooth 4 engages with the transverse front surface 18 of the support member 4.

The tooth 5 is fixed in position by means of two retainer pins 30,31, each having a recess 32 in their circumferential surface 33. An annular spring is 34 is clampingly engaged with the recess 32, and is accommodated in a widened part 35 of bore 36 extending through the support member 4, transversely to the side surfaces 16,17. The retainer pins 30,31 extend through holes 38,39 in the side walls 11, 12 of the tooth 4, and are substantially flush with these surfaces as shown in Figs. 5 and 6. Removal of the pins 31,32 can be easily effected by exerting an axial force on these pins for instance using a hammer and punch tool.

In the embodiment that is shown in Figs. 8, 9 and 10, the support member 4 comprises two parallel rear side surface sections 51,52 and two tapering front surface sections 53,54. The tooth 5 comprises two opposed inner side wall sections 55,56 and two tapering inner side wall sections 57, 58 which are contiguous with the surfaces 51-54 of the support member 4. Hereby two contact surfaces 53,54 are provided that are at an angle with the main force direction on the tooth 5. The increased surface area will help reduce movement of the tooth when a side load is exerted on the tooth.

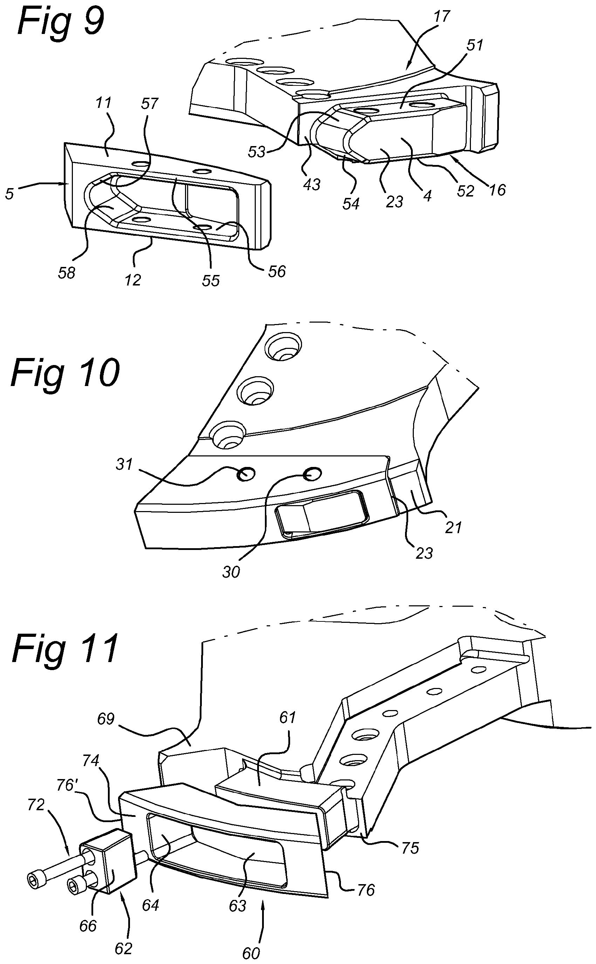

Figs. 11, 12 and 13 show a tooth 60 of a comparative example that is fixed to a tooth support member 61 via a wedge-shaped locking member 62. The external side 70 of rear transverse part 74 of the tooth 60 abuts against the shoulder 69. The locking member 62 is inserted into the opening 63 of the tooth and engages on the one hand, via a contact surface 67, with an internal rear surface 64 of rear transverse part 74 of the tooth and on the other hand, via a slanting surface 66, with the rear surface 65 of the support member 61. The rear surface 65 and the contiguous side surface 66 of the clamping member 62 define a wedge-shaped space. By connecting the clamping member 62 to the support member 61 via bolts 72, the tooth 61 is clamped between the shoulder 69, and the transverse front surface 71. The side walls of the tooth are supported on the base surface 75 of the tooth support member 61. As the front and rear of the tooth are symmetrical, the tooth 61 can be easily reversed upon wear of the cutting edge 76 to replace it by cutting edge 76'.

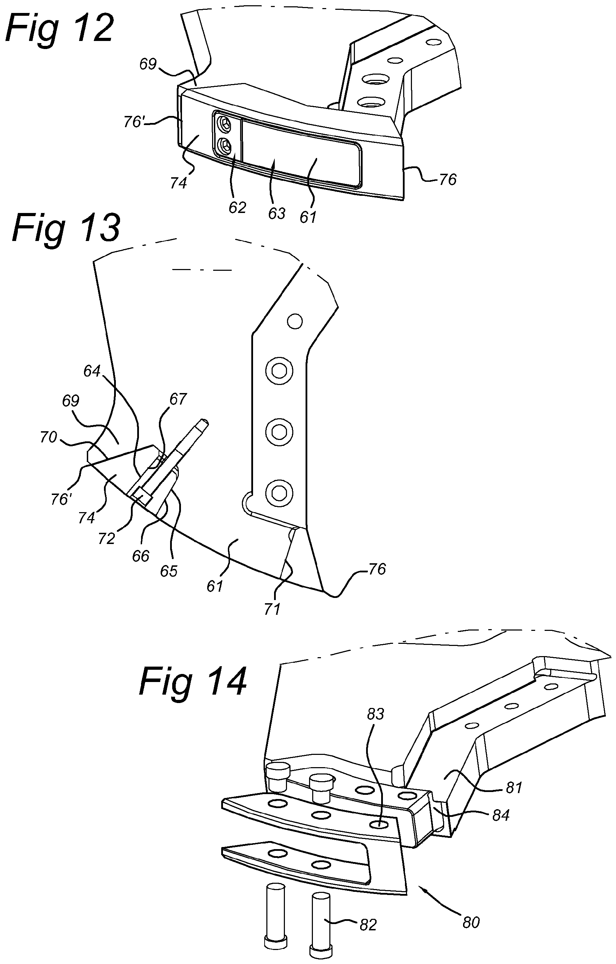

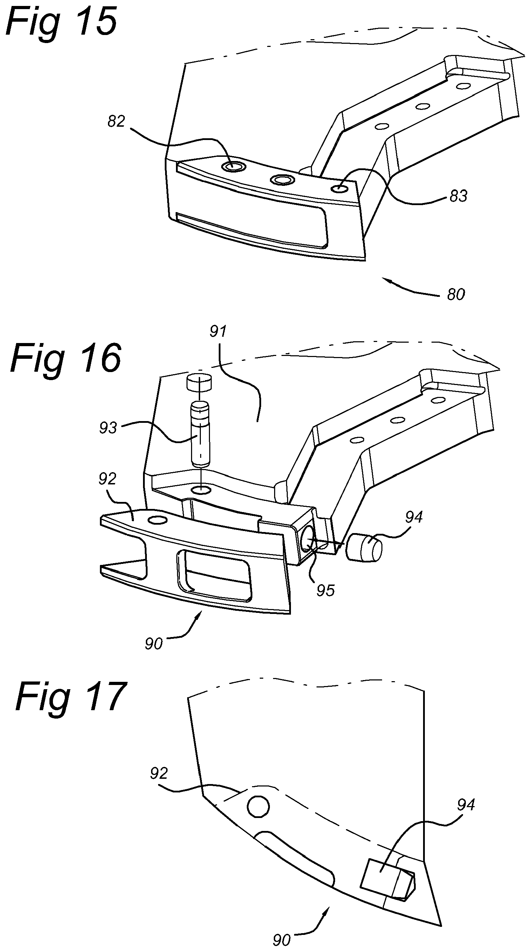

In the comparative example shown in Figs. 14 and 15 a substantially U-shaped tooth 80 is shown which is attached to the support number 81 via bolts 82 and a front locking pin 83 which engages with a slit 84 at the front of the support member .

A further alternative embodiment, as shown in Figs. 16 and 17, comprises tooth 90 which is fixed to a support number 91 via a rear flange 92 which is engaged via a retainer pin 93 and a front locking notch 94 inserted into a cavity 95.

### Industrial Applicability

A first embodiment of a tooth according to the invention shown in Figs. 2-10 combines easy mounting of the tooth on the work tool for exchange of the tooth with favourable load bearing characteristics. The largely closed top wall of the tooth takes up the impacts that are exerted on said top surface without these loads being transferred to the locking members, such as locking pins or locking bolts. The front part of the support member is effectively protected against impacts and wear by the tooth top wall. Forces on the top wall of the tooth are transferred to the underlying support member. At the position of the opening, the forces transversely to the tooth top wall are taken up directly by the support member, such that the tooth needs not be tightly supported along its whole top surface and some play is allowed which facilitates positioning of the tooth during attachment. Also, the opening in the top surface provides for a clear view of the relative position of the tooth and the support member for the operator during tooth exchange. The opening in the top surface allows dirt that is accumulated on the support member to exit from the inner space of the tooth and prevents it from being trapped between the support member and the internal tooth surfaces, hence improving attachment.

In the comparative example as shown in Figs. 11-13, the tooth can rapidly be exchanged by the easy release and fastening of the wedge shaped clamping member that is fixed to the underlying tooth support surface via a wedge-shaped clamping member.

The embodiment of the tooth with symmetrically arranged cutting edges, allows the tooth to be reconditioned for use after wear of the cutting edge, by reversal of the tooth on the support surface.

## Claims

1. Work tool (1) comprising a releasable tooth (5, 90) and a tooth support member (4, 91), the releasable tooth (5, 90) being releasably fixed to the tooth support member (4, 91),
- the tooth support member (4, 91) having a base surface (43, 75), two spaced apart side surfaces (16, 17), a front surface (18), a rear surface (19), and a top surface (23) extending along a length (L1) between the front surface (18) and the rear surface (19);
- the releasable tooth (5, 90) having two spaced-apart side walls (11, 12) situated alongside the side surfaces (16, 17), a front transverse part (13) and a top wall (8) extending along a length (L3) from the front transverse part (13), the top wall (8) being adapted for transferring a force exerted on the releasable tooth (50, 90) with a component that is directed transversely to the top wall (8), to the top surface (23) of the tooth support member (4, 91);
- the top wall (8) having an opening (15), overlying a part of the top surface (23) of the tooth support member (4, 91);
- **characterised in that** the side walls (11, 12) of the releasable tooth (5, 90) are supported by the base surface (43, 75).

2. Work tool according to claim 1, the front transverse part (13) of the tooth (5, 90) being adapted for transferring a force exerted on the tooth with a component transversely to the front transverse part (13), to the front surface (18) of the support member.

3. Work tool according to claim 1 or 2, the opening (15) extending from a front transverse edge (15') along a length (L2) of not more than approximately 50 % of the length (L3) of the top wall (8).

4. Work tool (1) according to any one of claims 1 - 3, wherein the opening (15) extends not more than 30%, preferably not more than 20% of the length (L3) of the top wall (8).

5. Work tool (1) according to any of claims 1 - 4, wherein the opening (15) extends along a length (L2) of not more than 75%, preferably not more than 30 %, most preferably not more than 20% of the length (L1) of the top surface (23).

6. Work tool (1) according to claim 1 or 2, each side wall (11, 12) being supported with a side wall edge (41,42) on the base surface (43,75) of the tooth support member (4, 91).

7. Work tool according to any one of claims 1 - 6, wherein the top surface (23) extends into the opening (15), preferably flush with the tooth top wall (8).

8. Work tool (1) according to any of claims 1 - 7, wherein top wall (8) extends to a rear transverse part (14) of the releasable tooth (5, 90) along the length (L3) and the opening (15) extends to a rear transverse edge (24) along the length (L2).

9. Work tool according to any of claim 3, wherein the front transverse edge (15') has a thickness (d), the top surface (23) having a first part (S1) that is at least substantially flush with the top wall (8) extending from the rear transverse edge (24) to a predetermined distance (H) from the front transverse edge (15').

10. Work tool according to claim 9, the top surface (23) having a contiguous second part (S2), at an angle to the first part, extending from the first part to below the top wall (8).

11. Work tool (1) according to claim 9 or 10, wherein the rear transverse part (14,74) is supported against a shoulder (21,69), which shoulder is oriented transversely to the base surface (43, 75) of the tooth support member (4).

12. Work tool (1) according to claim 11, wherein the rear transverse part (14,74) of the releasable tooth (5, 90) is seated in a recess (22) defined by the rear surface (19,65) of the tooth support member (4) and the shoulder (21, 69), an external side (23,70) of the rear transverse part (14,74) contacting the shoulder (21,69), an internal side (24,64) of the rear transverse part contacting the rear surface (19,65) of the tooth support member (4,61).

13. Work tool (1) according to claim 11 or 12 , an external side (23) of the rear transverse part (74) contacting the shoulder (69), an internal side (64) of the rear transverse part (74) being situated at a distance from the rear surface (65) of the tooth support member (61), a wedge-shaped clamping member (66) being fixed between and in contact with the internal side (64) of the rear transverse part (74) and the rear surface (65) of the support member (61), the clamping member via a fixing member (72) cooperating with the tooth support member (61) and exerting a force on the clamping member that is directed towards the base surface (75).

14. Work tool (1) according to any one of claims 1 - 13, further comprising a rear transverse part (74), an external side of the rear transverse part (74) contacting a shoulder (69), an internal side (64) of the rear transverse part (74) being situated at a distance from the rear surface (65) of the support member (61), a wedge-shaped clamping member (66) being fixed between and in contact with the internal side (64) of the rear transverse part (74) and the rear surface (65) of the support member (61), the clamping member via a fixing member (72) cooperating with the tooth support member (61) and exerting a force on the clamping member that is directed towards the base surface (75).

15. Work tool (1) according to any of the preceding claims, wherein a width (W) of the base surface (43) of the tooth support member (4) along the side surfaces (16,17) of the tooth support member (4, 91) is substantially equal to the thickness of the side walls (11,12) of the tooth (5).

16. Work tool (1) according to any of the preceding claims, the releasable tooth (4) being substantially symmetrical with respect to a central plane, transversely to the tooth top wall (8), each transverse part on either side of the plane defining a cutting edge (76,76').

17. Work tool (1) according to any of the preceding claims, the side surfaces (16, 17) of the tooth support member (4) comprising two opposed side surface sections (51,52) that extend substantially parallel to one another and two adjacent tapering front sections (53,54) which converge from the side surfaces to a common apex, the releasable tooth (5, 90) having internal side wall sections (55,56,57,58) which are substantially parallel to the respective side surface sections (51,52;53,54) of the tooth support member (4, 91)

18. Work tool (1) according to any of the preceding claims, at least one bore (36) extending transversely through the side walls (11,12) of the releasable tooth (5) and through the tooth support member (4), and a pin (30,31) extending in the bore, (36) from one side wall (11) to the opposite side wall (12), a widened recess (35) in the tooth support member (4) or in an inside side wall surface around the bore (36) comprising a fixation device (34), the pin (30, 31) being provided with complementary fixation device (32) which is recessed below a circumferential surface of the pin, engaging with the fixation device in the recess (35), the pin (30,31) being releasable from the fixation device (34) by exerting a predetermined axial force on the pin.

19. Work tool (1) according to claim 18, the fixation device (34) comprising a substantially annular spring.

20. Work tool (1) according to claim 18 or 19, the recess being provided in the tooth support member (4, 91).

## Patentansprüche

1. Arbeitswerkzeug (1), umfassend einen lösbaren Zahn (590) und ein Zahnstützelement (4, 91), wobei der lösbare Zahn (5, 90) lösbar an dem Zahnstützelement (4, 91) fixiert ist,
- wobei das Zahnstützelement (4, 91) eine Grundfläche (43, 75), zwei voneinander beabstandete Seitenflächen (16, 17), eine Vorderfläche (18), eine Rückfläche (19) und eine obere Fläche (23), die sich entlang einer Länge (L1) zwischen der Vorderfläche (18) und der Rückfläche (19) erstreckt, aufweist;
- wobei der lösbare Zahn (5, 90) zwei voneinander beabstandete Seitenwände (11, 12), die entlang der Seitenflächen (16, 17) angeordnet sind, einen vorderen Querteil (13) und eine obere Wand (8), die sich entlang einer Länge (L3) von dem vorderen Querteil (13) erstreckt, aufweist, wobei die obere Wand (8) zum Übertragen einer auf den lösbaren Zahn (50, 90) ausgeübten Kraft mit einer Komponente, die quer zu der oberen Wand (8) gerichtet ist, auf die obere Fläche (23) des Zahnstützelements (4, 91) angepasst ist;
- wobei die obere Wand (8) eine Öffnung (15) aufweist, die einen Teil der oberen Oberfläche (23) des Zahnstützelements (4, 91) überlagert;
- **dadurch gekennzeichnet, dass** die Seitenwände (11, 12) des lösbaren Zahns (5, 90) durch die Grundfläche (43, 75) gestützt werden.

2. Arbeitswerkzeug nach Anspruch 1, wobei der vordere Querteil (13) des Zahns (5, 90) zum Übertragen einer auf den Zahn ausgeübten Kraft mit einer Komponente quer zu dem vorderen Querteil (13) auf die Vorderfläche (18) des Stützelements angepasst ist.

3. Arbeitswerkzeug nach Anspruch 1 oder 2, wobei sich die Öffnung (15) von einer vorderen Querkante (15') entlang einer Länge (L2) von nicht mehr als etwa 50% der Länge (L3) der oberen Wand (8) erstreckt.

4. Arbeitswerkzeug (1) nach einem der Ansprüche 1-3, wobei sich die Öffnung (15) nicht mehr als 30%, vorzugsweise nicht mehr als 20% der Länge (L3) der oberen Wand (8) erstreckt.

5. Arbeitswerkzeug (1) nach einem der Ansprüche 1-4, wobei sich die Öffnung (15) entlang einer Länge (L2) von nicht mehr als etwa 75%, vorzugsweise nicht mehr als 30% und besonders bevorzugt nicht mehr als 20% der Länge (L1) der oberen Fläche (23) erstreckt.

6. Arbeitswerkzeug (1) nach Anspruch 1 oder 2, wobei jede Seitenwand (11, 12) mit einer Seitenwandkante (41, 42) auf der Grundfläche (43, 75) des Zahnstützelements (4, 91) gestützt ist.

7. Arbeitswerkzeug nach einem der Ansprüche 1-6, wobei sich die obere Fläche (23) in die Öffnung (15) hinein erstreckt, vorzugsweise bündig mit der oberen Zahnwand (8).

8. Arbeitswerkzeug (1) nach einem der Ansprüche 1-7, wobei sich die obere Wand (8) zu einem hinteren Querteil (14) des lösbaren Zahns (5, 90) entlang der Länge (L3) erstreckt und wobei sich die Öffnung (15) zu einer hinteren Querkante (24) entlang der Länge (L2) erstreckt.

9. Arbeitswerkzeug nach Anspruch 3, wobei die vordere Querkante (15') eine Dicke (d) aufweist, wobei die obere Fläche (23) einen ersten Teil (S1) aufweist, der zumindest im Wesentlichen mit der oberen Wand (8) bündig ist und sich von der hinteren Querkante (24) zu einem vorbestimmten Abstand (H) von der vorderen Querkante (15') erstreckt.

10. Arbeitswerkzeug nach Anspruch 9, wobei die obere Fläche (23) einen zusammenhängenden zweiten Teil (S2) aufweist, in einem Winkel zu dem ersten Teil, der sich von dem ersten Teil zu unterhalb der oberen Wand (8) erstreckt.

11. Arbeitswerkzeug (1) nach Anspruch 9 oder 10, wobei der hintere Querteil (14, 74) gegen eine Schulter (21, 69) gestützt ist, wobei die Schulter quer zu der Grundfläche (43, 75) des Zahnstützelements (4) gerichtet ist.

12. Arbeitswerkzeug (1) nach Anspruch 11, wobei der hintere Querteil (14, 74) des lösbaren Zahns (5, 90) in einer Aussparung (22), die durch die Rückfläche (19, 65) des Zahnstützelements (4) und der Schulter (21, 69) definiert wird, sitzt, wobei eine äußere Seite (23, 70) des hinteren Querteils (14, 74) die Schulter (21, 69) berührt, wobei eine innere Seite (24, 64) des hinteren Querteils die Rückfläche (19, 65) des Zahnstützelements (4, 61) berührt.

13. Arbeitswerkzeug (1) nach Anspruch 11 oder 12, wobei eine äußere Seite (23) des hinteren Querteils (74) die Schulter (69) berührt, wobei sich eine innere Seite (64) des hinteren Querteils (74) in einem Abstand von der Rückfläche (65) des Zahnstützelements (61) befindet, wobei ein keilförmiges Klemmelement (66) zwischen und in Kontakt mit der inneren Seite (64) des hinteren Querteils (74) und der Rückfläche (65) des Stützelements (61) fixiert ist, wobei das Klemmelement über ein Fixierungselement (72) mit dem Zahnstützelement (61) zusammenarbeitet und eine Kraft auf das Klemmelement ausübt, die in Richtung zu der Grundfläche (75) gerichtet ist.

14. Arbeitswerkzeug (1) nach einem der Ansprüche 1-13, weiter umfassend einen hinteren Querteil (74), wobei eine äußere Seite des hinteren Querteils (74) eine Schulter (69) berührt, wobei sich eine innere Seite (64) des hinteren Querteils (74) in einem Abstand von der Rückfläche (65) des Stützelements (61) befindet, wobei ein keilförmiges Klemmelement (66) zwischen und in Kontakt mit der inneren Seite (64) des hinteren Querteils (74) und der Rückfläche (65) des Stützelements (61) fixiert ist, wobei das Klemmelement über ein Fixierungselement (72) mit dem Zahnstützelement (61) zusammenarbeitet und eine Kraft auf das Klemmelement ausübt, die in Richtung zu der Grundfläche (75) gerichtet ist.

15. Arbeitswerkzeug (1) nach einem der vorstehenden Ansprüche, wobei eine Breite (W) der Grundfläche (43) des Zahnstützelements (4) entlang der Seitenflächen (16, 17) des Zahnstützelements (4, 91) im Wesentlichen gleich der Dicke der Seitenwände (11, 12) des Zahns (5) ist.

16. Arbeitswerkzeug (1) nach einem der vorstehenden Ansprüche, wobei der lösbare Zahn (4) im Wesentlichen symmetrisch in Bezug auf eine zentrale Ebene quer zu der oberen Zahnwand (8) ist, wobei jeder Querteil auf einer jeweiligen Seite der Ebene eine Schneidkante (76, 76') definiert.

17. Arbeitswerkzeug (1) nach einem der vorstehenden Ansprüche, wobei die Seitenflächen (16, 17) des Zahnstützelements (4) zwei gegenüberliegende Seitenflächenabschnitte (51, 52), die sich im Wesentlichen parallel zu einander erstrecken, und zwei benachbarte Vorderabschnitte (53, 54), die von den Seitenflächen zu einem gemeinsamen Scheitelpunkt konvergieren, umfasst, wobei der lösbare Zahn (5, 90) innere Seitenwandabschnitte (55, 56, 57, 58) aufweist, die im Wesentlichen parallel zu jeweiligen Seitenflächenabschnitten (51, 52; 53, 54) des Zahnstützelements (4, 91) sind.

18. Arbeitswerkzeug (1) nach einem der vorstehenden Ansprüche, wobei sich zumindest eine Bohrung (36) quer durch die Seitenwände (11, 12) des lösbaren Zahns (5) und durch das Zahnstützelement (4) erstreckt und wobei sich ein Stift (30, 31) in der Bohrung (36) von einer Seitenwand (11) zu der gegenüberliegenden Seitenwand (12) erstreckt, wobei eine erweiterte Aussparung (35) in dem Zahnstützelement (4) oder in einer inneren Seitenwand um die Bohrung (36) herum eine Fixierungsvorrichtung (34) umfasst, wobei der Stift (30, 31) mit einer komplementären Fixierungsvorrichtung (32) versehen ist, die unterhalb einer Umfangsfläche des Stifts ausgespart ist und die mit der Fixierungsvorrichtung in der Aussparung (35) in Eingriff kommt, wobei der Stift (30, 31) von der Fixierungsvorrichtung (34) durch ein Ausüben einer vorbestimmten axialen Kraft auf den Stift lösbar ist.

19. Arbeitswerkzeug (1) nach Anspruch 18, wobei die Fixierungsvorrichtung (34) eine im Wesentlichen ringförmige Feder umfasst.

20. Arbeitswerkzeug (1) nach Anspruch 18 oder 19, wobei die Aussparung in dem Zahnstützelement (4, 91) vorgesehen ist.

## Revendications

1. Outil de travail (1) comprenant une dent amovible (590) et un élément de support de dent (4, 91), la dent amovible (5, 90) étant fixée de manière amovible à l'élément de support de dent (4, 91),
- l'élément de support de dent (4, 91) ayant une surface de base (43, 75), deux surfaces latérales espacées l'une de l'autre (16, 17), une surface avant (18), une surface arrière (19), et une surface supérieure (23) s'étendant suivant une longueur (L1) entre la surface avant (18) et la surface arrière (19) ;
- la dent amovible (5, 90) ayant deux parois latérales (11, 12) espacées l'une de l'autre situées le long des surfaces latérales (16, 17), une partie transversale avant (13) et une paroi supérieure (8) s'étendant suivant une longueur (L3) depuis la partie transversale avant (13), la paroi supérieure (8) étant adaptée pour transférer à la surface supérieure (23) de l'élément de support de dent (4, 91) une force exercée sur la dent amovible (50, 90) avec un composant qui est dirigé transversalement à la paroi supérieure (8) ;
- la paroi supérieure (8) ayant une ouverture (15), recouvrant une partie de la surface supérieure (23) de l'élément de support de dent (4, 91) ;
- **caractérisé en ce que** les parois latérales (11, 12) de la dent amovible (5, 90) sont supportées par la surface de base (43, 75).

2. Outil de travail selon la revendication 1, la partie transversale avant (13) de la dent (5, 90) étant adaptée pour transférer à la surface avant (18) de l'élément de support une force exercée sur la dent avec un composant transversalement à la partie transversale avant (13).

3. Outil de travail selon la revendication 1 ou 2, l'ouverture (15) s'étendant depuis un bord transversal avant (15') suivant une longueur (L2) de pas plus de 50 % environ de la longueur (L3) de la paroi supérieure (8).

4. Outil de travail (1) selon l'une quelconque des revendications 1 à 3, dans lequel l'ouverture (15) s'étend sur pas plus de 30%, de préférence sur pas plus de 20 % de la longueur (L3) de la paroi supérieure (8).

5. Outil de travail (1) selon l'une quelconque des revendications 1 à 4, dans lequel l'ouverture (15) s'étend suivant une longueur (L2) de pas plus de 75 %, de préférence de pas plus de 30 %, plus préférablement de pas plus de 20 % de la longueur (L1) de la surface supérieure (23).

6. Outil de travail (1) selon la revendication 1 ou 2, chaque paroi latérale (11, 12) étant supportée avec un bord de paroi latérale (41, 42) sur la surface de base (43, 75) de l'élément de support de dent (4, 91).

7. Outil de travail selon l'une quelconque des revendications 1 à 6, dans lequel la surface supérieure (23) s'étend jusque dans l'ouverture (15), de préférence au ras de la paroi supérieure de dent (8).

8. Outil de travail (1) selon l'une quelconque des revendications 1 à 7, dans lequel la paroi supérieure (8) s'étend jusqu'à une partie transversale arrière (14) de la dent amovible (5, 90) suivant la longueur (L3) et l'ouverture (15) s'étend jusqu'à un bord transversal arrière (24) suivant la longueur (L2).

9. Outil de travail selon la revendication 3, dans lequel le bord transversal avant (15') a une épaisseur (d), la surface supérieure (23) ayant une première partie (S1) qui est au moins sensiblement au ras de la paroi supérieure (8) s'étendant depuis le bord transversal arrière (24) jusqu'à une distance (H) prédéterminée du bord transversal avant (15').

10. Outil de travail selon la revendication 9, la surface supérieure (23) ayant une seconde partie contiguë (S2), à un certain angle par rapport à la première partie, s'étendant depuis la première partie jusqu'au-dessous de la paroi supérieure (8).

11. Outil de travail (1) selon la revendication 9 ou 10, dans lequel la partie transversale arrière (14, 74) est supportée contre un épaulement (21, 69), lequel épaulement est orienté transversalement à la surface de base (43, 75) de l'élément de support de dent (4).

12. Outil de travail (1) selon la revendication 11, dans lequel la partie transversale arrière (14, 74) de la dent amovible (5, 90) est assise dans un évidement (22) défini par la surface arrière (19, 65) de l'élément de support de dent (4) et l'épaulement (21, 69), un côté externe (23, 70) de la partie transversale arrière (14, 74) étant en contact avec l'épaulement (21, 69), un côté interne (24, 64) de la partie transversale arrière étant en contact avec la surface arrière (19, 65) de l'élément de support de dent (4, 61).

13. Outil de travail (1) selon la revendication 11 ou 12, un côté externe (23) de la partie transversale arrière (74) étant en contact avec l'épaulement (69), un côté interne (64) de la partie transversale arrière (74) étant situé à une certaine distance de la surface arrière (65) de l'élément de support de dent (61), un élément de serrage en forme de coin (66) étant fixé entre et en contact avec le côté interne (64) de la partie transversale arrière (74) et la surface arrière (65) de l'élément de support (61), l'élément de serrage via un élément de fixation (72) coopérant avec l'élément de support de dent (61) et exerçant une force sur l'élément de serrage qui est dirigée vers la surface de base (75).

14. Outil de travail (1) selon l'une quelconque des revendications 1 à 13, comprenant en outre une partie transversale arrière (74), un côté externe de la partie transversale arrière (74) étant en contact avec un épaulement (69), un côté interne (64) de la partie transversale arrière (74) étant situé à une certaine distance de la surface arrière (65) de l'élément de support (61), un élément de serrage en forme de coin (66) étant fixé entre et en contact avec le côté interne (64) de la partie transversale arrière (74) et la surface arrière (65) de l'élément de support (61), l'élément de serrage via un élément de fixation (72) coopérant avec l'élément de support de dent (61) et exerçant une force sur l'élément de serrage qui est dirigée vers la surface de base (75).

15. Outil de travail (1) selon l'une quelconque des revendications précédentes, dans lequel une largeur (W) de la surface de base (43) de l'élément de support de dent (4) le long des surfaces latérales (16, 17) de l'élément de support de dent (4, 91) est sensiblement égale à l'épaisseur des parois latérales (11, 12) de la dent (5).

16. Outil de travail (1) selon l'une quelconque des revendications précédentes, la dent amovible (4) étant sensiblement symétrique par rapport à un plan central, transversalement à la paroi supérieure de dent (8), chaque partie transversale de chaque côté du plan définissant une arête tranchante (76, 76').

17. Outil de travail (1) selon l'une quelconque des revendications précédentes, les surfaces latérales (16, 17) de l'élément de support de dent (4) comprenant deux sections de surface latérale (51, 52) opposées qui s'étendent sensiblement parallèlement l'une à l'autre et deux sections avant (53, 54) coniques adjacentes qui convergent depuis les surfaces latérales vers un sommet commun, la dent amovible (5, 90) ayant des sections de paroi latérale interne (55, 56, 57, 58) qui sont sensiblement parallèles aux sections (51, 52 ; 53, 54) de surface latérale respectives de l'élément de support de dent (4, 91).

18. Outil de travail (1) selon l'une quelconque des revendications précédentes, au moins un alésage (36) s'étendant transversalement à travers les parois latérales (11, 12) de la dent amovible (5) et à travers l'élément de support de dent (4), et un axe (30, 31) s'étendant dans l'alésage (36) depuis une paroi latérale (11) jusqu'à la paroi latérale (12) opposée, un évidement (35) élargi dans l'élément de support de dent (4) ou dans une surface de paroi latérale intérieure autour de l'alésage (36) comprenant un dispositif de fixation (34), l'axe (30, 31) étant muni d'un dispositif de fixation complémentaire (32) qui est encastré sous une surface périphérique de l'axe, en prise avec le dispositif de fixation dans l'évidement (35), l'axe (30, 31) pouvant être retiré du dispositif de fixation (34) en exerçant une force axiale prédéterminée sur l'axe.

19. Outil de travail (1) selon la revendication 18, le dispositif de fixation (34) comprenant un ressort sensiblement annulaire.

20. Outil de travail (1) selon la revendication 18 ou 19, l'évidement étant prévu dans l'élément de support de dent (4, 91).
